Europäisches Patentamt

European Patent Office

Office européen des brevets

(11) Publication number: **0 204 928 B1**

# EUROPEAN PATENT SPECIFICATION

(45) Date of publication of patent specification: 24.07.91     (51) Int. Cl.⁵: **G01D 5/12**

(21) Application number: **86105368.4**

(22) Date of filing: **18.04.86**

(54) **Exciting of magnetic field for amorphous-alloy sensor.**

(30) Priority: **18.04.85 JP 82870/85**
**08.05.85 JP 97218/85**
**25-12-1985**

(43) Date of publication of application:
**17.12.86 Bulletin 86/51**

(45) Publication of the grant of the patent:
**24.07.91 Bulletin 91/30**

(84) Designated Contracting States:
**DE FR GB**

(56) References cited:
**WO-A-79/00369**
**US-A- 4 812 758**

**PATENT ABSTRACTS OF JAPAN, vol. 8, no.
75 (P-266)[1512], 7th April 1984 & JP-A-58 221
139 (MATSUSHITA DENKI SANGYO K.K.)
22-12-1983**

**PATENT ABSTRACTS OF JAPAN, vol. 6, no.
162 (P-137)[1040], 25th August 1982 & JP-
A-57 79 461 (HITACHI SEISAKUSHO K.K.)
18-05-1982**

**PATENT ABSTRACTS OF JAPAN, vol. 10, no.
143 (P-459)[2200], 27th May 1986 & JP-A-60
262 064 (MATSUSHITA DENKI SANGYO K.K.)**

(73) Proprietor: **MATSUSHITA ELECTRIC INDUSTRI-
AL CO., LTD.**
**1006, Oaza Kadoma**
**Kadoma-shi, Osaka-fu, 571(JP)**

(72) Inventor: **Yamashita, Ichiro**
**Arusu-Fuji 201 Makinosaka 1-chome**
**Hirakata City, 573(JP)**
Inventor: **Wakamiya, Masayuki**
**4-13, Saidera 4-chome**
**Suita City, 565(JP)**
Inventor: **Hase, Hiroyuki**
**1-401, Myokenzaka 5-chome**
**Katano City, 576(JP)**
Inventor: **Tokuono, Shinya**
**8-3, Wakamiya-cho**
**Ashiya City, 659(JP)**

(74) Representative: **Dr. Elisabeth Jung Dr. Jürgen
Schirdewahn Dipl.-Ing. Claus Gernhardt
P.O. Box 40 14 68 Clemensstrasse 30
W-8000 München 40(DE)**

## Description

The present invention relates to a method of operating an amorphous-alloy sensor of the type excited by a magnetic field.

Various kinds of sensor devices for detecting stress, strain and the like by utilizing magnetostriction of an amorphous magnetic alloy have conventionally been proposed. The principles of the detection are based on the following: Firstly, a magnetic circuit of the sensor contains at least a part made by an amorphous magnetic alloy. Secondly, a strain is generated on the amorphous magnetic alloy part at a measurement operation of an object, for example, strain of stress caused by pressure, tension, bending etc. Thirdly, the change of the magnetic characteristics of such a magnetic circuit, especially the change of inductance of the magnetic circuit is detected. Fourthly, the value of the measurement object (such as stress, strain and the like) is measured by the detected change of the magnetic characteristics. For detection of the change of inductance of the magnetic circuit, a magnetic field generated by an alternating current is given to the magnetic circuit. Hereupon, it is well known that the sensitivity of the sensor for detection may be raised, reproducibility can be improved, and thermal characteristics can be remarkably improved by impressing such a magnetic field that is generated by an alternating current superposed with a direct current on the magnetic circuit. However, it becomes obvious that the magnetic permeability of the amorphous magnetic alloy changes as the time passes. Thereby the sensitivity and the reliability of the measurement are deteriorated (this phenomenon is generally called disaccomodation). Accordingly, when such an amorphous magnetic alloy is used for a sensor device, a stable output cannot be retained for a long measuring time. Such a pressure sensor is e.g. disclosed in Patent Abstracts of Japan, Vol. 8, No. 75, (P-266) (1512), 7th April 1984.

As mentioned above, the conventional method cannot provide a stable output because of the disaccommodation of the amorphous magnetic alloy during a long measurement time, while the sensitivity of the conventional amorphous-alloy sensor is good. Therefore, an amorphous-alloy sensor of long-time stable characteristic has been demanded.

Accordingly, the purpose of the present invention is to provide an amorphous-alloy sensor capable of retaining a stable characteristic for a long time.

Excitation of a magnetic field for application to an amorphous-alloy sensor in accordance with the present invention is indicated in claim 1. Further preferred variations of the method of the invention are subject of the subclaims.

The invention is further explained in the following description of preferred embodiments of the invention and with regard to the drawings. In the drawings:

FIG. 1 is a cross-sectional side view showing a well-known oil pressure sensor using an amorphous magnetic alloy.

FIG. 2 is a diagram showing a simple waveform of the well known alternating current.

Fig.3 is a characteristic diagram showing the change of the inductance in proportion to the pressure intensity under a condition of using a conventional magnetic field generated by the simple alternating current shown in FIG. 2.

FIG.4 is a characteristic diagram showing the change of inductance intensity in proportion to the value of a magnetic field generated by the direct current which is superposed on the alternating current when such a magnetic field is inpressed on the oil-pressure sensor shown in FIG. 1.

FIG.5 is a diagram showing a preferred embodiment of a waveform in accordance with the present invention which is inputted to an amorphous-alloy sensor for exciting a magnetic field.

FIG.6 is a characteristic diagram showing the relation between the magnetic flux density and the magnetic field (B-H roup) of an amorphous magnetic alloy.

FIG.7 is a characteristic diagram showing the result measured by a sensor impressed with a magnetic field excited by the method in accordance with the present invention.

FIG.8 is a diagram showing another embodiment of waveform in accordance with the present invention which is inputted to an amorphous-alloy sensor for exciting a magnetic field.

FIG.9 is a diagram showing another embodiment of the waveform in accordance with the present invention which is inputted into an amorphous-alloy sensor for exciting a magnetic field.

FIG. 10 (a) and FIG. 10 (b) are diagrams, showing the voltage and electric current respectively, for exciting a magnetic field in accordance with the present invention.

FIG.11 is a circuit diagram showing an electric circuit for exciting a magnetic field shown in FIG.5.

FIG. 12 is a circuit diagram showing an electric circuit for exciting a magnetic field shown in FIG.8.

FIG. 13 is a circuit diagram showing an electric circuit for exciting a magnetic field shown in FIG. 9

FIG.14 is circuit diagram showing an electric circuit for exciting a magnetic field shown in FIG. 10 (b).

EP 0 204 928 B1

DETAILED DESCRIPTION OF THE PREFERRED EMBODIMENTS

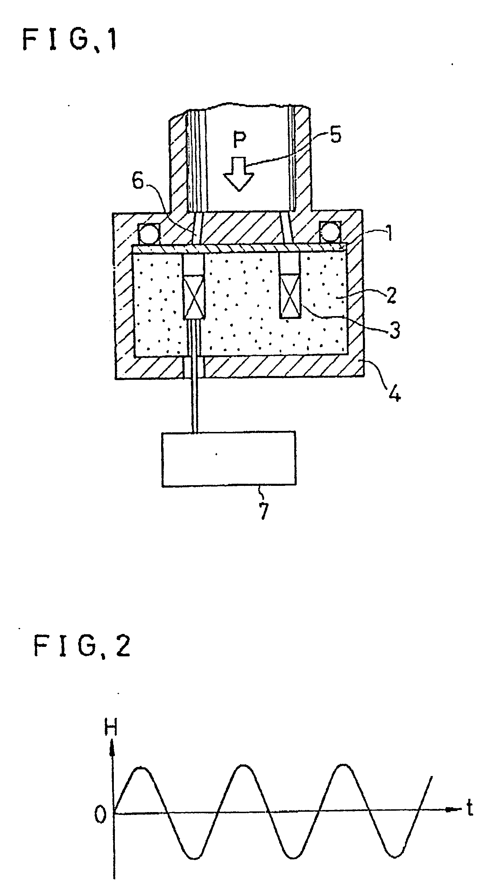

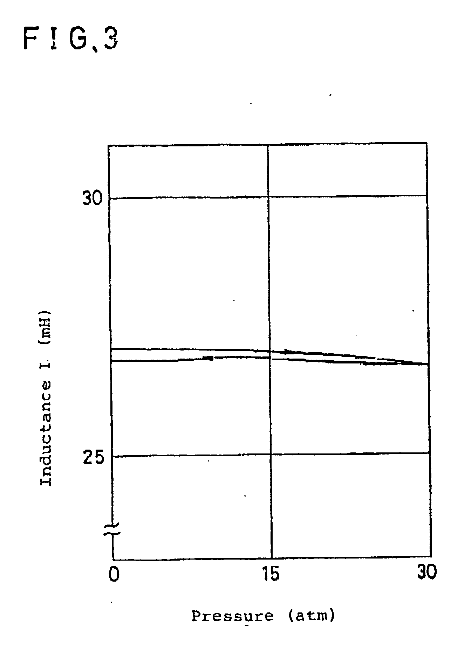

As a preferred embodiment of the present invention, method of operating an amorphous-alloy sensor of the type excited by a magnetic field described in the following. FIG.1 is a cross-sectional side view showing an oil-pressure sensor using an amorphous magnetic alloy. In this oil-pressure sensor, a magnetic circuit is constituted by an amorphous magnetic alloy 1 which has magnetostriction properties and a soft magnetic ferrite 2. A coil 3 for exciting such a magnetic circuit is disposed in the center gap part of the soft magnetic ferrite 2. All components such as the amorphous magnetic alloy 1, the soft magnetic ferrite 2 and the coil 3 are contained in a case 4. A pressure P which may be measured by this oil-pressure sensor is impressed by passing through a guide part 5 and through holes 6 to the amorphous magnetic alloy 1. When the strain occurs on the amorphous magnetic alloy caused by the impression of the pressure, the magnetic characteristics of the amorphous magnetic alloy 1 is changed by the magnetostrictive effect. The change of the magnetic characteristics is detected by an inductance measuring circuit 7, and as a result, the pressure is detected as the value of inductance. When a well-known alternating current is inpressed on the coil 3 of above-mentioned oil-pressure sensor, an alternative magnetic field shown in FIG.2 is excited on the magnetic circuit. In such case, there are some defects, such as a low output signal of the inductance measuring circuit 7 corresponding to the change of the inductance value in proportion to the oil-pressure intensity, poor reproducibility, generation of hysterisis, and instability caused by disaccommodation of the amorphous magnetic alloy. FIG.3 shows the change of the inductance of the magnetic circuit vs. pressure of the conventional example, wherein, an alternating magnetic field excited by the known alternating current shown in FIG.2 is used. The arrow marks show the series of measurement points.

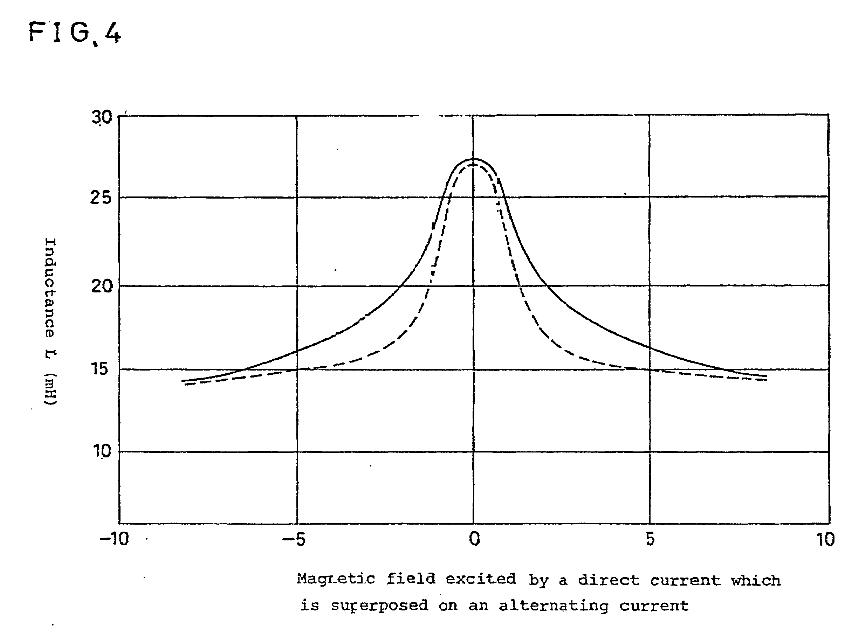

FIG.4 shows the change of inductance in proportion to the intensity of the magnetic field excited by a direct current superposed on an alternating current, in the case when such a magnetic field was impressed on the oil-pressure sensor shown in FIG.1 under the conditions of O atmospheric pressure and 30 atmospheres pressure of the oil-pressure. The temperature was $50\,^{\circ}C$ and the frequency of the alternating current superposed on the direct current was 20 kHz.

When attention is paid on the inductance values on the line of $Hdc = O$, namely which means that the magnetic field was excited by a well-known simple alternating current, the change of the output level is too small to indicate the oil-pressure intensity thereby. Accordingly, it is observed that the excitation of a magnetic field using a well -known simple alternating current is not suitable. But there are suitable magnetic field regions for measuring, when a direct current is superposed on an alternating current, where the change of the output level is amplified, for example, in such a region Hdc is nearly equal + 2.5.

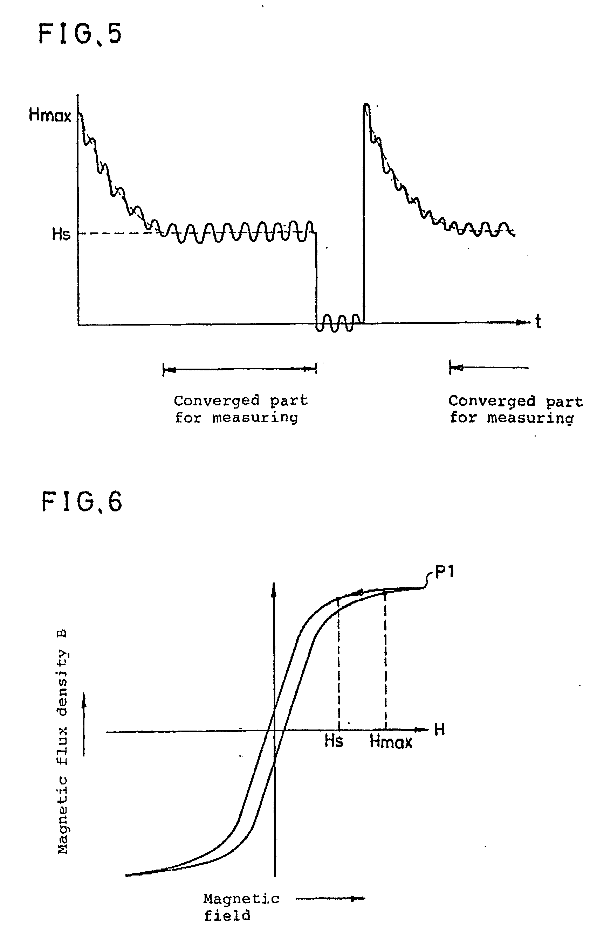

FIG.5 shows the intensity of a magnetic field excited by an exciting method in accordance with the present invention which is impressed on the amorphous magnetic alloy 1 of the oil-pressure sensor shown in FIG.1. Such a magnetic field has an alternating component and a rectangular component, which are respectively formed in proportion to the alternating electric current part and superposed on the rectangular electric current part. This magnetic field is characterized by having parts of larger amplitude Hmax at start-up points and parts of smaller amplitude Hs after gradually converging in a predetermined time period. Measuring of the inductance of the magnetic circuit is practiced by using the converged parts of such a magnetic field shown in FIG.5. Such a rectangular element of the magnetic field (or the rectangular electric current) is repeated after a predetermined period has passed. By impressing such a magnetic field shown in FIG.5 on the amorphous magnetic alloy 1 in FIG.1 for measuring the intensity of oil pressure, the larger amplitude Hmax of the magnetic field orients the magnetic domains of the amorphous magnetic alloy, this phenomenon is shown as point P1 in FIG. 6. As the result of the orientation of magnetic domain of the amorphous magnetic alloy, the disaccommodation and other instabilities of the amorphous magnetic alloy are removed, and the level of the output signal of the inductance measuring circuit 7 as shown in FIG.4 is remarkably improved.

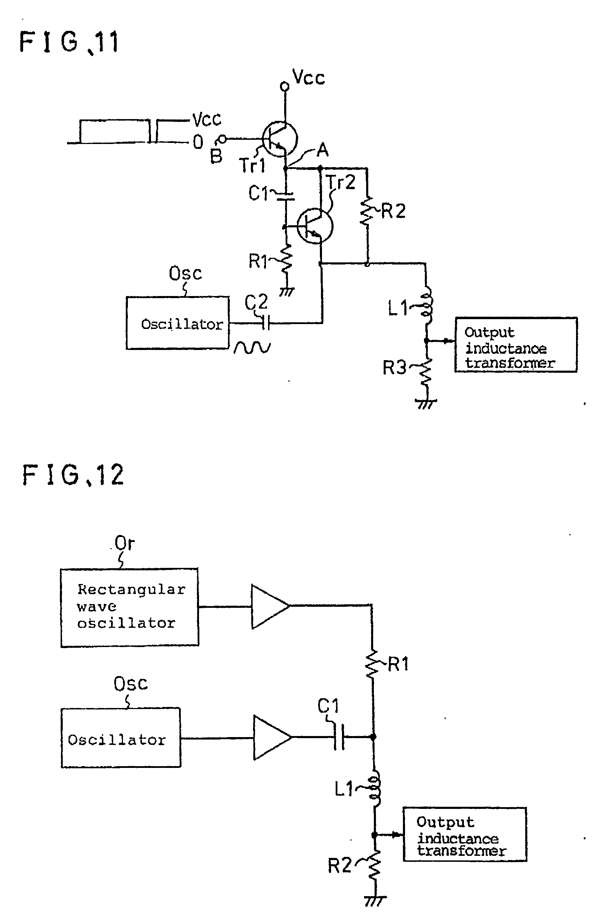

FIG.11 shows an embodiment of an electric circuit for exciting the magnetic field. The electric power source is periodically switched ON and OFF by a transistor Tr1 corresponding to a base signal of the transistor Tr1, and the voltage of point A changes between HIGH and LOW and corresponding to the change of base signal of the transistor Tr1.A transistor Tr2 takes the ON state during a time period defined by a time constant of a capacitor C1 and a resistor R1, and outputs a large amplitude voltage to a coil L1 (hereupon, coil L1 corresponds to coil 3 in FIG. 1) at the start-up point of the voltage of point A. After a predetermined time period has passed the transistor Tr2 changes to the OFF state, and the converged direct electric current is impressed on the coil L1 by a resistor R2. An alternating current is impressed on the coil L1 by an oscillator Osc passing through capacitor C2. By repeating such an operation, the magnetic field shown in FIG.6 is excited.

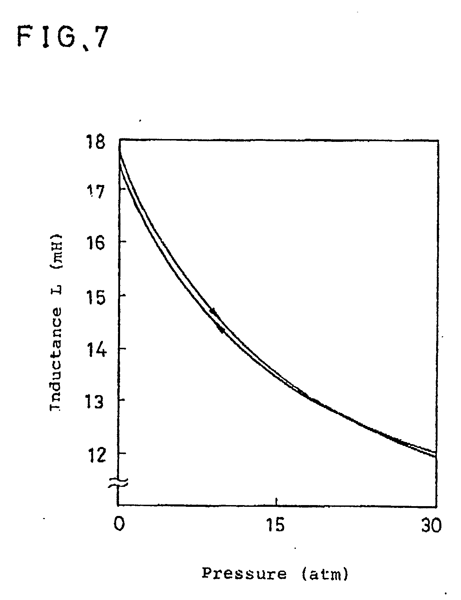

FIG.7 shows the result of inductance measurement using the oil-pressure sensor shown in FIG.1 and

3

EP 0 204 928 B1

applying the magnetic field shown in FIG.5. Compared to the measured result using the conventional method shown in FIG.2, the reproducibility, stability and sensitivity of the embodiment are remarkably improved.

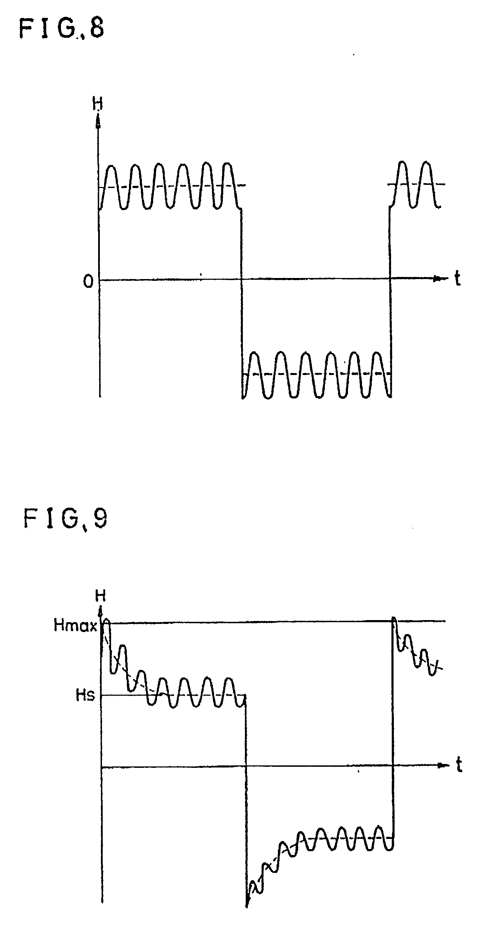

FIG.8 shows the waveform of the magneitc field of another embodiment in accordance with the present invention. Such a waveform is formed by superposing a magnetic field of a larger amplitude and lower frequency rectangular wave and a magnetic field of a smaller amplitude and higher frequency alternating current wave. In this embodiment, the low frequency rectangular magnetic field has the same effect as a superposed direct magnetic field excited by a direct electric current. Accordingly, the repetition of the rectangular magnetic field demagnetises the amorphous magnetic alloy and suppresses the change with the passage of time.

FIG.12 shows the electric circuit for exciting the magnetic field shown in FIG.8. The output signal of oscillator Or, which is the lower frequency rectangular electric current, is amplified and impressed on a coil L1 disposed in the ferrite 2 as shown in FIG. 1, passing through a resistor R1. The alternating electric current is output from oscillator Osc, amplified and inputted into the coil L1 passing through capacitor C1. Accordingly coil L1 excites a magnetic field shown in FIG.8 by such a superposition of a rectangular electric current and an alternating electric current. By impressing such a magnetic field shown in FIG.8 into the oil-pressure sensor shown in FIG. 1, the same output signal of inductance as shown in FIG.7 is obtainable.

FIG.9 shows the waveform of a magnetic field of still another embodiment in accordance with the present invention. This magnetic field has a larger amplitude part Hmax at the start-up point and a converged smaller amplitude part Hs after gradually converging in predetermined time period. Measuring of the inductance of the magnetic circuit is practiced by using the converged part of such a magnetic field. In this case, the amorphous magnetic alloy is once impressed with the large amplitude magnetic field Hmax, and the magnetic domains of the amorphous magnetic alloy are oriented. Thereafter measuring is practiced, so that the amorphous magnetic alloy is magnetically stable. As a result, the disaccommodation and other instabilities of the amorphous magnetic alloy are removed and the level of the output signal of the inductance measuring circuit 7 is remarkably improved, just as in the case of the mentioned embodiments.

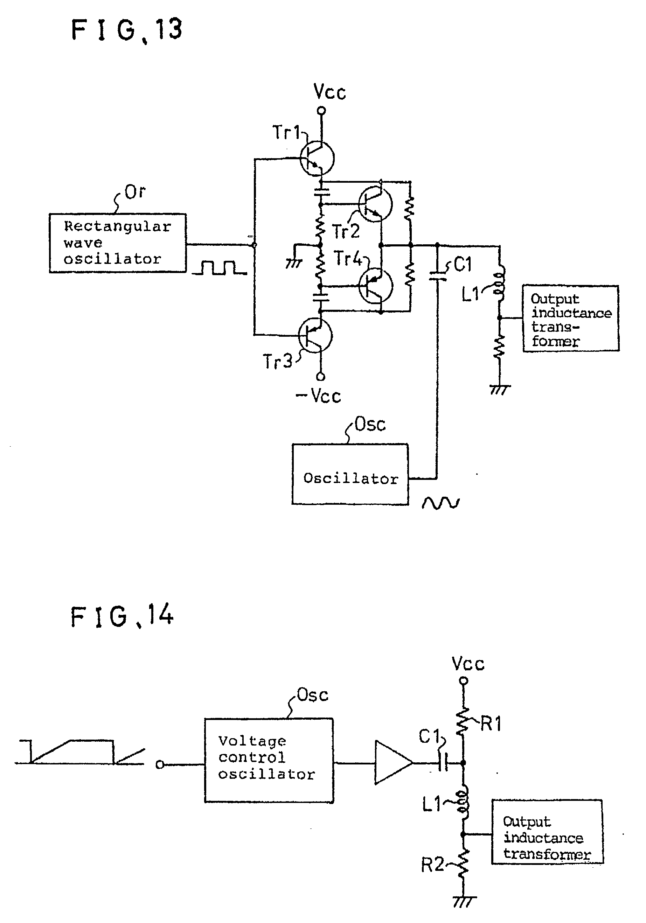

FIG.13 shows an example of an electric circuit for exciting magnetic field shown in FIG.9. This electric circuit has a similar function as the electric circuit shown in FIG.11 by using the output signal of low frequency rectangular oscillator Or and picking up the output signals of combinations of transistor Tr1 and Tr2, and Tr3 and Tr4 on $+V_{cc}$ and $-V_{cc}$ terminals. An alternating electric current is output from an oscillator Osc, and impressed on a coil L1, passing through a capacitor C1. By using such an electric circuit, a magnetic field shown in FIG.9. is generated which has a pattern that the magnetic field shown in FIG.5 is periodically reversed. By impressing such a magnetic field shown in FIG.9 on oil-pressure sensor shown in FIG.1, the same output signal of the inductance as shown in FIG.7 is obtainable.

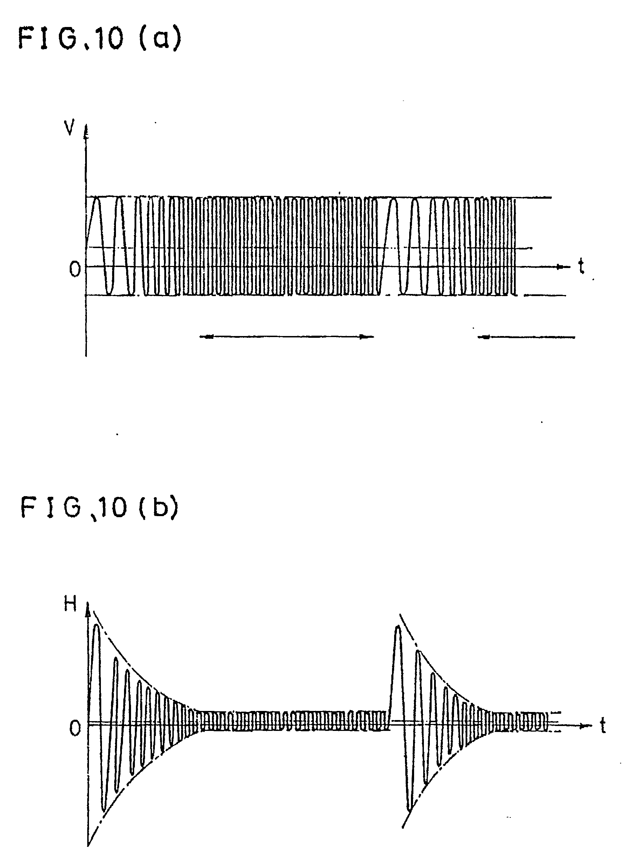

FIG.10 (a) and (b) show waveform of voltage and magnetic field of still other embodiment in accordance with the present invention. Measuring of the inductance of the magnetic circuit is made by a magnetic field of higher frequency parts of such a waveform,and the frequency changing parts between lower frequency and higher frequency are not used. The impedance value of the oil-pressure sensor Z is given by the following expression wherein L is inductance of the coil 3 and f is frequency of the magnetic field:

$$Z = 2\pi f \cdot L \qquad (1).$$

The intensity of field H impressed on the amorphous magnetic alloy, which is in proportion to the electric current value, is given as:

$$H \propto i \propto \frac{V}{2\pi f \cdot L} \qquad \cdots\cdots (2),$$

wherein, V is the voltage amplitude across the coil 3. Accordingly, the waveform of the magnetic field shown in FIG.10(b) for demagnetisation is obtainable, and there is no need at all to switch the current from a demagnetising waveform to a measuring waveform or vice versa. This is realized by using an alternating voltage of a waveform having constant amplitude and periodically varying its frequency between a higher frequency and a lower frequency as shown in FIG.10(a).

FIG.14 shows an electric circuit for exciting a magnetic field shown in FIG.10(b). By inputting a control signal having a waveform shown in FIG. 14 into voltage control oscillator Osc, the voltage control oscillator Osc outputs an alternating voltage having a periodically varying frequency which varies between a higher

4

EP 0 204 928 B1

frequency and a lower frequency, and such an alternating voltage is amplified and inputted to coil 3, passing through capacitor C1. A direct electric current is supplied by the electric power source, passing through a resistor R1. In this case, a similar result of inductance measurement is obtainable using the oil-sensors shown in FIG. 1 and FIG. 7.

## Claims

1. A method of operating an amorphous-alloy sensor of the type excited by a magnetic field, comprising the steps of:
   - impressing an alternating electric current through a coil for exciting a magnetic field on a magnetic circuit which contains at least one amorphous magnetic alloy part,
   - exposing the amorphous magnetic alloy part to a measurement object for measuring the intensity of the measurement object,
   - detecting the changes of the magnetic characteristics of the magnetic circuit, and
   - outputting signals in proportion to the intensity of the measurement object,
   **characterised in that**
   - at least one of the amplitude or frequency of the alternating current is variable,
   - the amplitude variation being made by superposing the alternating current with a rectangular waveform and
   - the frequency variation being made by periodically varying the frequency between a higher and a lower frequency.

2. The method of claim 1, wherein the alternating current is superposed with a cyclically recurring rectangular current which has, in each cycle thereof, a large amplitude at a start-up point and which converges to a smaller amplitude after a predetermined time period.

3. The method of claim 1, wherein the electric current is formed by superposing a direct current component and an alternating current component having a constant amplitude and repeatedly varying the frequency from a lower frequency to a higher frequency within a predetermined time at the top of each cycle, the higher frequency being used for the measurement of the magnetic circuit.

4. The method of claim 1, wherein a magnetic alloy is selected which contains at least one magnetic alloy part having magnetostrictive properties, thereby to excite the magnetic field into a form of an alternating current magnetic field comprising a superposed component of a rectangular current which has a large amplitude at a start-up point and converges to a smaller amplitude after passing a predetermined time period.

5. The method of claim 1, wherein
   - a magnetic alloy with magnetostrictive characteristics is selected,
   - the measurement object is a parameter inducing a stress in the amorphous magnetic alloy, and
   - the electric current has an alternating current component and a cyclically recurring rectangular current component having a selected initial amplitude that converges to a smaller amplitude after a predetermined time period.

6. The method of claim 1, wherein the electric current is defined by a first rectangular waveform having a selected amplitude and frequency superposed with an alternating current waveform having a smaller amplitude than the selected amplitude and a higher frequency than the selected frequency.

7. The method of claim 1, wherein the electric current is defined by an alternating current waveform having a constant amplitude and periodically varying in frequency between a higher frequency and a lower frequency.

## Revendications

1. Procédé pour faire fonctionner un capteur en alliage amorphe du type excité par un champ magnétique, comprenant les étapes consistant à :
   - appliquer un courant électrique alternatif par l'intermédiaire d'une bobine afin de développer un champ magnétique sur un circuit magnétique qui contient au moins une partie en alliage magnétique amorphe,
- exposer la partie en alliage magnétique amorphe à un objet de mesure afin de mesurer l'intensité de l'objet de mesure,
- détecter les changements de la caractéristique magnétique du circuit magnétique, et
- sortir des signaux proportionnels à l'intensité de l'objet de mesure,
caractérisé en ce que :
- au moins l'amplitude ou la fréquence du courant alternatif est variable,
- la variation de l'amplitude étant obtenue en superposant le courant alternatif à une forme d'onde rectangulaire, et
- la variation de la fréquence étant réalisée en faisant varier périodiquement la fréquence entre une fréquence haute et une fréquence basse.

2. Procédé selon la revendication 1, dans lequel le courant alternatif est superposé à un courant rectangulaire à récurrence cyclique qui présente, dans chacun de ses cycles, une grande amplitude à un point de départ et qui converge vers une amplitude plus petite après un laps de temps prédéterminé.

3. Procédé selon la revendication 1, dans lequel le courant électrique est formé en superposant une composante en courant continu et une composante en courant alternatif ayant une amplitude constante et en faisant varier de façon répétée la fréquence entre une fréquence basse et une fréquence haute dans un laps de temps prédéterminé à la partie supérieure de chaque cycle, la fréquence haute étant utilisée pour la mesure du circuit magnétique

4. Procédé selon la revendication 1, dans lequel un alliage magnétique est choisi qui contient au moins une partie en alliage magnétique ayant des propriétés magnétostrictives, d'où il résulte le développement du champ magnétique sous une forme de champ magnétique à courant alternatif comprenant une composante superposée d'un courant rectangulaire qui présente une amplitude élevée à un point de départ et converge vers une amplitude plus faible à l'issue d'un laps de temps prédéterminé.

5. Procédé selon la revendication 1, dans lequel :
- un alliage magnétique ayant des caractéristiques magnétostrictives est sélectionné,
- l'objet de mesure est un paramètre provoquant une contrainte dans l'alliage magnétique amorphe, et
- le courant électrique a une composante en courant alternatif et une composante en courant rectangulaire à récurrence cyclique ayant une amplitude initiale sélectionnée qui converge vers une amplitude plus faible à l'issue d'un laps de temps prédéterminé.

6. Procédé selon la revendication 1, dans lequel le courant électrique est défini par une première forme d'onde rectangulaire ayant une amplitude et une fréquence sélectionnées superposée à une forme d'onde de courant alternatif ayant une amplitude plus petite que l'amplitude sélectionnée et une fréquence plus grande que la fréquence sélectionnée.

7. Procédé selon la revendication 1, dans lequel le courant électrique est défini par une forme d'onde de courant alternatif ayant une amplitude constante et variant périodiquement en fréquence entre une fréquence haute et une fréquence basse.

**Patentansprüche**

1. Verfahren zum Betreiben eines Amorphlegierungssensors derjenigen Art, die durch ein Magnetfeld erregt wird, umfassend die Schritte des:
- Aufdrückens eines elektrischen Wechselstromes über eine Spule zum Erregen eines Magnetfeldes an einem Magnetkreis, der wenigstens einen Teil aus einer amorphen magnetischen Legierung enthält,
- Aussetzens des Teiles aus der amorphen magnetischen Legierung einem Meßobjekt zum Messen der Intensität des Meßobjektes,
- Feststellens der Änderungen der magnetischen Eigenschaften des Magnetkreises, und
- Lieferns von Signalen proportional zu der Intensität des Meßobjektes,
dadurch **gekennzeichnet, daß**

- wenigstens die Amplitude oder die Frequenz des Wechselstroms variabel ist,
- die Amplitudenänderung vorgenommen wird durch Überlagern des Wechselstroms mit einer Rechteckwellenform, und
- die Frequenzänderung vorgenommen wird durch periodisches Ändern der Frequenz zwischen einer höheren und einer niedrigeren Frequenz.

2. Verfahren nach Anspruch 1, wobei der Wechselstrom mit einem zyklisch wiederkehrenden Rechteckstrom überlagert wird, der in jedem Zyklus von ihm an einem Startpunkt eine große Amplitude hat und der nach einer vorbestimmten Zeitperiode zu einer kleineren Amplitude konvergiert.

3. Verfahren nach Anspruch 1, wobei der elektrische Strom gebildet ist durch Überlagern einer Gleichstromkomponente und einer Wechselstromkomponente, die konstante Amplitude hat, und durch wiederholtes Ändern der Frequenz von einer niedrigeren Frequenz zu einer höheren Frequenz innerhalb einer vorbestimmten Zeit an der Spitze jedes Zyklus, wobei die höhere Frequenz für Messung des Magnetkreises verwendet wird.

4. Verfahren nach Anspruch 1, wobei eine magnetische Legierung ausgewählt wird, die wenigstens einen Teil aus einer magnetischen Legierung enthält, der magnetostriktive Eigenschaften hat, um dadurch das Magnetfeld in Form eines Wechselstrommagnetfeldes zu erregen, welches eine überlagernde Komponente eines Rechteckstromes umfaßt, die am Startpunkt eine große Amplitude hat und nach Verstreichen einer vorbestimmten Zeitperiode zu einer kleineren Amplitude konvergiert.

5. Verfahren nach Anspruch 1, wobei
   - eine magnetische Legierung ausgewählt wird mit magnetostriktiven Eigenschaften,
   - das Meßobjekt ein Parameter ist, der eine Beanspruchung in die amorphe magnetische Legierung induziert, und
   - der elektrische Strom eine Wechselstromkomponente und eine zyklisch wiederkehrende Rechteckstromkomponente hat, welche eine ausgewählte anfängliche Amplitude hat, die nach einer vorbestimmten Zeitperiode zu einer kleineren Amplitude konvergiert.

6. Verfahren nach Anspruch 1, wobei der elektrische Strom definiert ist durch eine erste Rechteckwellenform, die eine ausgewählte Amplitude und eine ausgewählte Frequenz hat, und mit einer Wechselstromwellenform überlagert ist, die eine kleinere Amplitude als die ausgewählte Amplitude und eine höhere Frequenz als die ausgewählte Frequenz hat.

7. Verfahren nach Anspruch 1, wobei der elektrische Strom durch eine Wechselstromwellenform definiert ist, die eine konstante Amplitude und eine Frequenz hat, die sich zwischen einer höheren Frequenz und einer niedrigeren Frequenz periodisch ändert.

FIG.1

FIG.2

F I G, 3

FIG.4

Inductance L (mH)

Magnetic field excited by a direct current which
is superposed on an alternating current

## FIG.5

Converged part
for measuring

Converged part
for measuring

## FIG.6

Magnetic flux density B

Magnetic
field

11

FIG.7

## FIG.8

## FIG.9

FIG.10 (a)

FIG.10 (b)

FIG.11

FIG.12

# FIG, 13

Vcc

Tr1

Or

Rectangular
wave
oscillator

Tr2

Tr4

Tr3

−Vcc

C1

L1

Output
inductance
trans-
former

Osc

Oscillator

# FIG, 14

Osc

Voltage
control
oscillator

Vcc

R1

C1

L1

R2

Output
inductance
transformer